# FASCICULE DE BREVET EUROPEEN

(11) **EP 4 377 174 B1**
(45) Date de publication et mention de la délivrance du brevet: **11.03.2026**
(21) Numéro de dépôt: 22762120.8
(22) Date de dépôt: 27.07.2022
(51) Int. Cl.: B60T 11/18, G05G 1/46

(54) **SYSTEME DE FREINAGE D'UN VEHICULE COMPRENANT UN CLIP DE LIAISON RESISTANT**
BREMSSYSTEM EINES FAHRZEUGS MIT EINEM WIDERSTANDSVERBINDUNGSCLIP
BRAKE SYSTEM OF A VEHICLE INCLUDING A RESISTANT LINK CLIP

(30) Priorité: 30.07.2021 FR 2108322
(43) Date de publication de la demande: 05.06.2024
(73) Titulaire: Renault s.a.s, 92100 Boulogne Billancourt (FR); LISI Automotive Rapid, 95651 Cergy Pontoise Cedex (FR)
(72) Inventeur: BOUAL, Francois, 78280 GUYANCOURT (FR); DUTTO-CUINIER, Christian, 16600 TOUVRE (FR); ZGAJNAR, Patrick, 93600 Aulnay sous Bois (FR)
(74) Mandataire: Ipsilon
(86) Numéro de dépôt international: PCT/FR2022/051511
(87) Numéro de publication internationale: WO 2023/007091

(56) Documents cités:
- EP-A1- 3 015 944
- FR-A1- 2 893 291
- FR-A1- 2 900 618
- US-A1- 2024 109 527
- US-B2- 6 993 907

## Description

La présente invention concerne un système de freinage d'un véhicule comprenant un clip de liaison résistant. Le document EP3015944A1 divulgue des moyens de couplage entre un bras de levier de pédale de frein et une tige d'actionnement, comprenant une tige venant à travers le levier et la tige d'actionnement pour un couplage en rotation du bras de levier et de la tige d'actionnement.

De façon générale, un système de freinage d'un véhicule comprend une pédale de frein comportant un bras de levier au bout duquel se trouve un patin d'actionnement, et une tige de poussée d'un amplificateur de freinage. La liaison entre cette pédale de frein et cet amplificateur de freinage est assurée par un clip permettant de relier le bras de levier de la pédale de frein à la tige de poussée de l'amplificateur. De cette manière, un conducteur de véhicule désirant effectuer une opération de freinage, va exercer une pression avec son pied sur le patin d'actionnement, entrainant un déplacement du bras de levier de la pédale de frein. Le déplacement de ce bras de levier va alors engendrer, grâce au clip de liaison, une translation de la tige de poussée pour le déclenchement de la phase de freinage.

Pour être performant un tel clip de liaison doit présenter un double niveau de sécurité, à travers la présence :
- d'un axe de rotation destiné à traverser à la fois la tige de poussée et le bras de levier de la pédale,
- d'une zone d'enserrement destinée à venir se refermer autour de la tige de poussée.

Les clips de liaison à double composante de sécurité et qui sont actuellement utilisés sur les véhicules, sont en métal. Or, un tel clip de liaison présente le double inconvénient d'alourdir le véhicule et de nécessiter une lubrification régulière.

Un système de freinage selon l'invention comprend un clip de liaison présentant une bonne résistance mécanique tout en s'affranchissant des inconvénients relevés dans l'état de la technique.

L'invention a pour objet un système de freinage d'un véhicule comprenant une pédale de frein possédant un bras de levier, et un amplificateur de freinage doté d'une tige de poussée, ladite tige de poussée étant solidarisée au bras de levier de la pédale de frein au moyen d'un clip de liaison comportant une première composante de sécurité sous la forme d'un axe de rotation traversant le bras de levier de la pédale de frein, et la tige de poussée, et une deuxième composante de sécurité sous la forme d'une zone d'enserrement venant se refermer autour de la tige de poussée.

Selon l'invention, le clip incluant la première composante de sécurité et la deuxième composante de sécurité est réalisé en matière plastique, l'axe de rotation constituant la première composante de sécurité comprenant un insert métallique. La particularité d'un système de freinage selon l'invention est qu'il comprend un clip, dont la zone d'enserrement est intégralement réalisée en matière plastique et dont l'axe de rotation est réalisé en matière plastique et possède un insert métallique.

Selon une caractéristique possible de l'invention, le clip est moulé autour de l'insert métallique. Pour cette configuration, le clip est intégralement réalisé dans le même matériau plastique.

Selon une caractéristique possible de l'invention, la tige de poussée se termine par une patte de liaison comprenant deux parois parallèles et écartées, chacune desdites parois parallèles étant dotée d'une ouverture destinée au passage de l'axe de rotation. Autrement dit, la tige se termine par une pièce ayant globalement une forme en U, l'espace situé entre les deux parois parallèles et écartées de la patte de liaison permettant le passage du bras de levier de la pédale de frein. De cette manière, l'axe de rotation du clip, traverse les deux parois parallèles et écartées de la patte de liaison ainsi que le bras de levier de la pédale de frein. Avantageusement, les deux parois sont allongées et leurs axes longitudinaux sont parallèles à l'axe longitudinal de la tige, lesdites deux parois prolongeant ladite tige de façon à accroître la longueur de ladite tige.

Selon une caractéristique possible de l'invention, l'insert métallique de l'axe de rotation traverse les deux parois parallèles de la patte de liaison terminant la tige de poussée. L'insert métallique est allongé et joint les deux parois parallèles et écartées de la patte de liaison, et confère ainsi à l'axe de rotation une bonne résistance mécanique par rapport aux contraintes engendrées par la présence de ces deux parois parallèles.

Selon une caractéristique possible de l'invention, l'insert métallique possède une longueur qui est supérieure à celle de l'axe de rotation de sorte qu'une extrémité dudit insert métallique arase une extrémité dudit axe de rotation et une autre extrémité de cet insert émerge d'une autre extrémité de cet axe de rotation.

. Les deux extrémités de l'insert métallique sont à considérer par rapport à un axe longitudinal dudit insert métallique et les deux extrémités de l'axe de rotation sont à considérer par rapport à un axe longitudinal dudit axe de rotation. Pour cette configuration, une extrémité de l'insert métallique et une extrémité de l'axe de rotation se correspondent, tandis que l'autre extrémité de l'insert métallique émerge de l'autre extrémité de l'axe de rotation. Autrement dit, l'extrémité saillante de l'insert métallique est visible sur le clip.

Selon une caractéristique possible de l'invention, l'axe de rotation possède une zone d'extrémité cylindrique présentant au moins une butée de retenue empêchant le retrait de l'axe de rotation du clip de liaison, une fois que ledit axe a traversé les deux parois parallèles de la patte de liaison terminant la tige de poussée. Ladite au moins une butée de retenue agit comme un élément anti-retour, empêchant l'axe de rotation une fois qu'il a été placé dans sa position définitive dans le système de freinage selon l'invention, de se déplacer au fil du temps et de se désengager de la tige de poussée et du bras de levier de la pédale.

Selon une caractéristique possible de l'invention, le système de freinage comprend deux butées de retenue déformables et diamétralement opposées, pour permettre l'insertion dans un sens de l'axe de rotation dans les ouvertures des parois parallèles de la patte de liaison terminant la tige, et pour empêcher son retrait dans l'autre sens. En effet, il faut produire, un certain effort pour introduire les deux butées de retenue dans les ouvertures des deux parois parallèles pour qu'elles puissent se déformer élastiquement ; Une fois que les deux butées ont dépassées les ouvertures elles reprennent leur forme initiale par relaxation, empêchant ainsi un retrait de l'axe de rotation.

Selon une caractéristique possible de l'invention, la zone d'enserrement du clip de liaison comprend deux pattes déformables élastiquement dont l'écartement par défaut est inférieur au diamètre de la tige, lesdites deux pattes étant d'abord écartées pour le passage de la tige de poussée avant de se refermer autour de celle-ci par relaxation. Pour cette configuration, la fixation du clip de liaison nécessite un certain effort pour écarter les deux pattes déformables lors de leur passage autour de la tige de poussée. Une fois que lesdites deux pattes ont dépassé ladite tige, elles se referment autour de celle-ci par une relaxation naturelle.

L'invention a pour autre objet un clip de liaison pour la réalisation d'un système de freinage selon l'invention, ledit clip comprenant une première composante de sécurité sous la forme d'un axe de rotation et une deuxième composante de sécurité sous la forme d'une zone d'enserrement.

Selon l'invention, ledit clip incluant la première composante de sécurité et la deuxième composante de sécurité est réalisé en matière plastique, l'axe de rotation constituant la première composante de sécurité comprenant un insert métallique.

Selon une caractéristique possible de l'invention, la longueur de l'insert métallique est supérieure à celle de l'axe de rotation, une première extrémité de l'insert métallique comportant une embase élargie et une deuxième extrémité dudit insert métallique comprenant un segment de faible diamètre se terminant par un pion élargi, ledit insert métallique étant inséré dans l'axe de rotation par coulissement de sorte que le pion élargi doive traverser à force un tronçon rétréci de l'axe de rotation avant de se retrouver derrière ledit tronçon rétréci pour jouer le rôle d'une butée anti-retour, l'embase élargie affleurant une surface dudit clip.

L'invention a pour autre objet un procédé de fixation d'une pédale de frein à un amplificateur de freinage pour réaliser un système de freinage selon l'invention, ledit procédé étant réalisé au moyen d'un clip de liaison selon l'invention.

Selon l'invention, le procédé comprend les étapes suivantes :
- une étape de placement du bras de levier de la pédale de frein à une extrémité de la tige de poussée,
- une étape d'insertion de l'axe de rotation du clip de liaison dans une zone terminale de la tige de poussée de l'amplificateur de freinage et dans le bras de levier de la pédale de frein,
- une étape de mise en rotation du clip de liaison autour de son axe de rotation traversant la tige de poussée et le bras de levier de la pédale de frein, jusqu'à ce que la zone d'enserrement vienne au contact de ladite tige de poussée,
- une étape de poursuite de la rotation du clip s'accompagnant d'abord d'un écartement forcé de deux pattes déformables élastiquement constituant la zone d'enserrement pour faire passer la tige entre lesdites deux pattes, puis d'un rabattement desdites deux pattes autour de la tige par une relaxation naturelle de ces pattes déformables.

Un système de freinage selon l'invention présente l'avantage de mettre en œuvre un clip de liaison qui est beaucoup plus léger que les clips de liaison en métal utilisés actuellement, tout en ayant une bonne tenue mécanique. Il a de plus l'avantage d'éliminer l'étape de graissage mise en ceuvre actuellement sur les clips de liaison métalliques, permettant de réaliser des économies et réduisant les risques de mauvais fonctionnement liés à un oubli de l'étape de graissage ou à une mauvaise réalisation de ladite étape de graissage.

On donne ci-après une description détaillée d'un mode de réalisation préféré d'un système de freinage selon l'invention en se référant aux figures suivantes :
[Fig.1] représente une vue en perspective d'un système de freinage selon l'invention, montrant une zone de liaison entre la tige de l'amplificateur de freinage et le bras de levier de la pédale de frein,
[Fig.2] représente une vue en perspective sous un autre angle de la zone de liaison de la [Fig.1],
[Fig.3] représente une vue en perspective d'un clip de liaison selon l'invention,
[Fig.4] représente une schématique en coupe du clip de la [Fig.3],
[Fig.5] représente une vue de côté d'un système de freinage selon l'invention en cours de montage, montrant une zone de liaison entre la tige de l'amplificateur de freinage et le bras de levier de la pédale de frein.

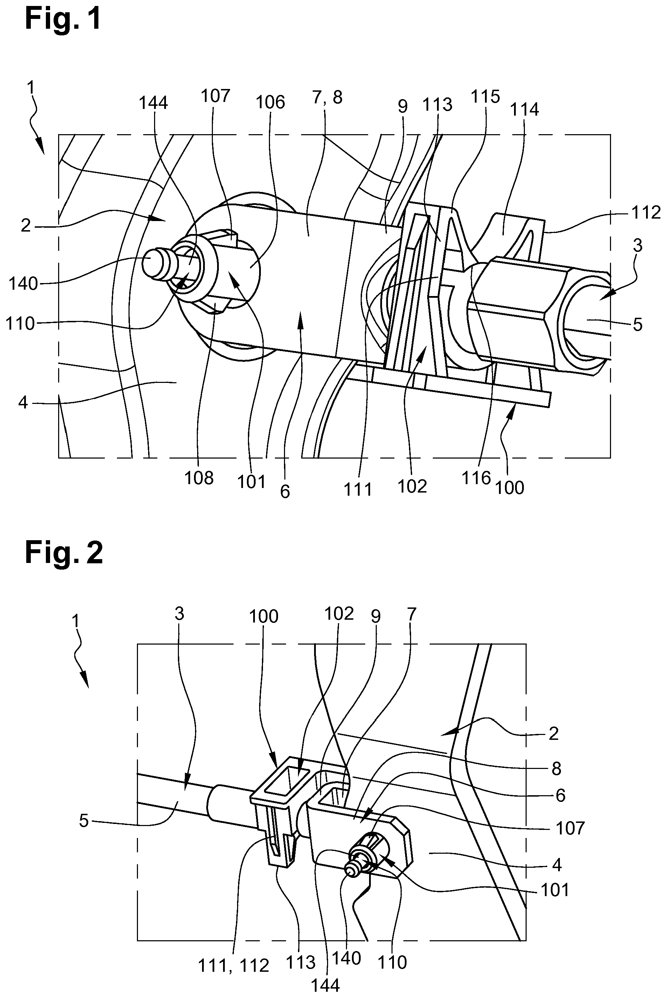

En se référant aux figures 1, 2 et 5, un système de freinage 1 selon l'invention comprend une pédale de frein 2 et un amplificateur 3 de freinage, reliés l'un à l'autre au moyen d'un clip 100 de liaison. Schématiquement, la pédale de frein 2 comprend classiquement un bras de levier 4 se terminant par un patin d'actionnement (non représenté sur les figures), et l'amplificateur de freinage 3 comprend une tige 5 de poussée. Le bras de levier 4 de la pédale 2 de frein est relié à la tige de poussée 5 au moyen du clip 100 de liaison. Un conducteur du véhicule désirant réaliser une phase de freinage de son véhicule, va exercer avec son pied une pression sur le patin d'actionnement, engendrant un mouvement du bras de levier 4. Ce mouvement va être à l'origine d'une translation de la tige de poussée 5, activant ainsi l'amplificateur 3 de freinage.

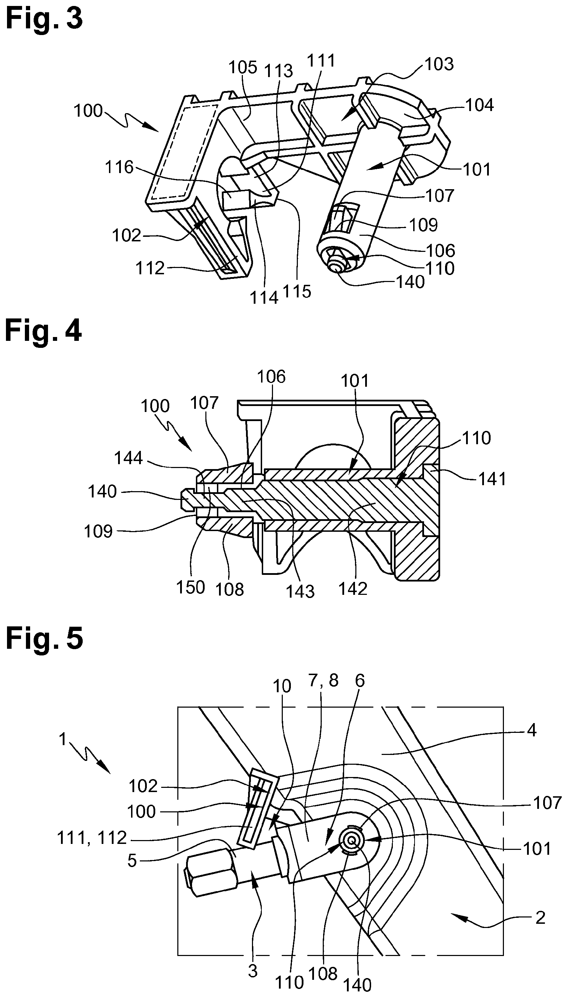

En se référant à la [Fig.3], le clip de liaison 100 reliant le bras de levier 4 de la pédale de frein 2 à la tige de poussée 5, est réalisé en matière plastique et comprend :
- une première composante de sécurité sous la forme d'un axe de rotation 101 creux, et
- une deuxième composante de sécurité sous la forme d'une zone d'enserrement 102.

Le clip 100 comprend une paroi principale 103 plane et allongée, dont une première extrémité 104 porte l'axe de rotation 101 et dont une deuxième extrémité 105 porte la zone d'enserrement 102, lesdites deux extrémités étant à considérer par rapport à un axe longitudinal de ladite paroi principale 103. La première extrémité 104 est plane et l'axe de rotation 101 est cylindrique. Cet axe de rotation 101 prend naissance sur la première extrémité 104 et s'étend suivant une direction qui est perpendiculaire à un plan dans lequel s'inscrit ladite première extrémité 104. L'axe de rotation 101 est allongé et possède une zone d'extrémité 106 considérée par rapport à un axe longitudinal dudit axe 101, comportant deux butées 107, 108 externes profilées. Chacune des butées 107, 108 est allongée et s'étend suivant un axe longitudinal de l'axe de rotation 101. Elles sont diamétralement opposées et prennent chacune naissance sur un bord d'extrémité 109 de la zone d'extrémité 106 de l'axe de rotation 101, et s'étendent le long dudit axe de rotation 101 vers la première extrémité 104 de la paroi principale 103 du clip 100 en s'épaississant Ces butées 107, 108 sont réalisées en matière plastique et ont des propriétés de déformation élastique. La zone d'extrémité 106 de l'axe de rotation 101 possédant les deux butées 107, 108 externes présente un canal interne 150 dont la section transversale est de forme oblongue.

En se référant à la [Fig.4], l'axe de rotation 101 qui est réalisé en matière plastique comprend un insert métallique 110 sous la forme d'un noyau cylindrique allongé, dont un axe longitudinal est parallèle à un axe longitudinal de l'axe de rotation 101. Plus précisément, l'insert métallique 110 est placé dans l'axe de rotation 101 de sorte que leurs axes de révolution soient confondus. L'insert métallique 110 comprend une première extrémité 141 sous la forme d'une embase cylindrique élargie et une deuxième extrémité 140 sous la forme d'un pion arrondi. L'embase élargie 141 est prolongée par un corps principal cylindrique 142 dont le diamètre est inférieur à celui de ladite embase 141, ledit corps principal 142 étant lui-même prolongé par un corps secondaire cylindrique 143 dont le diamètre est inférieur à celui du corps principal 142. Le corps cylindrique secondaire 143 est prolongé par une extension cylindrique 144 dont le diamètre est inférieur à celui du corps cylindrique secondaire 143, ladite extension 144 se terminant par le pion arrondi 140 dont le diamètre est sensiblement égal à celui du corps secondaire 143. La longueur de l'insert métallique 110 est supérieure à celle de l'axe de rotation 101, si bien qu'une fois placé dans ledit axe de rotation 101, le pion arrondi 140 émerge d'une extrémité dudit axe de rotation 101, tandis que l'embase élargie 141 arase l'autre extrémité dudit axe de rotation 101. La forme générale de l'insert métallique 110 trouve sa justification lors de son introduction dans l'axe de rotation 101, En effet, l'insert métallique 110 est introduit dans l'axe de rotation 101 par l'extrémité dudit canal qui est opposée à celle qui est matérialisée par la zone d'extrémité 106 possédant les deux butées externes 107, 108, cette introduction étant réalisée par le pion arrondi 140. L'insert métallique 110 est alors déplacé dans l'axe de rotation 101 jusqu'à ce que le pion 140 arrondi parvienne jusqu'au canal interne 150 de la zone d'extrémité 106 dont la section transversale est de forme oblongue. Puisque les dimensions dudit pion 140 sont supérieures à celles dudit canal interne 150, la progression de l'insert métallique 110 dans l'axe de rotation 101 se poursuit au prix d'un certain effort, qui cesse instantanément dès que ledit pion 140 a traversé ledit canal interne 150 et se retrouve à l'extérieur dudit axe de rotation 101. Ce pion arrondi 140 agit comme une butée anti-retour empêchant l'insert métallique 110 de repartir dans l'autre sens au sein de l'axe de rotation 101 pour ressortir dudit axe de rotation 101.

En se référant aux figures 1 et 3, la zone d'enserrement 102 est composée de deux pattes 111, 112 déformables élastiquement, chaque patte 111, 112 comportant un corps principal plan 113 prolongé par un segment secondaire replié 114 faisant un angle inférieur à 60° avec ledit corps principal 113. Chaque segment secondaire 114 présente une première extrémité 115 qui est en contact avec le corps principal 113, et une deuxième extrémité 116 libre. Les deux pattes 111, 112 sont disposées sur le clip 100 de sorte que :
- les corps principaux 113 de celles-ci soient parallèles et séparés en se faisant face,
- les segments secondaires sont situés dans un espace délimité par les deux corps principaux 113 et convergent l'un vers l'autres. Autrement dit, la distance séparant les premières extrémités 115 de ces segments secondaires 114 est supérieure à la distance séparant les deuxièmes extrémités 116 libres desdits segments secondaires 114. Lesdites deuxièmes extrémités libres 116 ménagent entre elles par défaut un espace libre.

Il est à noter que les segments secondaires 114 des deux pattes 111, 112 sont déformables élastiquement.

En se référant à la [Fig.2], la tige de poussée 5 de l'amplificateur 3 de freinage se termine par une patte de liaison 6 comprenant deux parois 7, 8 parallèles et écartées, dotées chacune d'une ouverture, et une paroi de liaison 9 reliant lesdites deux parois 7, 8 parallèles en étant perpendiculaire à celles-ci. La tige de poussée 5 se termine dans la paroi de liaison 9 en étant perpendiculaire à ladite paroi de liaison 9. Les deux parois parallèles 7, 8 sont allongées et sont positionnées de sorte que leurs axes longitudinaux s'étendent parallèlement à un axe longitudinal de la tige de poussée 5. Autrement dit, ces deux parois parallèles 7, 8 ont tendance à accroitre la longueur de la tige de poussée 5.

Un procédé de fixation d'une pédale 2 de frein à un amplificateur 3 de freinage pour réaliser un système de freinage selon l'invention, comprend les étapes suivantes :
- une étape de placement du bras de levier 4 de la pédale 2 de frein entre les deux parois parallèles 7, 8 de la patte de liaison 6 terminant la tige de poussée 5,
- une étape d'insertion de l'axe de rotation 101 du clip 100 dans les ouvertures des deux parois parallèles 7, 8 de la patte de liaison 6, et dans une ouverture du bras de levier 4. Une fois que cette insertion est terminée, l'insert métallique 110 joint les deux parois parallèles 7, 8 de la patte de liaison 6, et la zone d'extrémité 106 comportant les deux butées 107, 108 émerge d'un côté de l'une des deux parois parallèles 7, 8 en étant extérieure à l'espace situé entre lesdites parois parallèles 7, 8. Grâce à la présence de ces deux butées 107, 108 déformables élastiquement, l'axe de rotation 101 du clip 100 ne peut plus être retiré simplement des deux parois parallèles 7, 8 de la patte de liaison 6 terminant la tige de poussée 5. L'insertion de l'axe de rotation 101 dans les ouvertures des deux parois parallèles 7, 8 a été réalisée au prix d'un certain effort, pour notamment forcer le passage des deux butées de retenue 107, 108 dans lesdites ouvertures,
- une étape de mise en rotation du clip 100 de liaison autour de son axe de rotation 101 comme illustré à la [Fig.5] par la flèche 10, jusqu'à ce que la zone d'enserrement 102 vienne au contact de la tige de poussée 5,
- une étape de poursuite de la rotation du clip 100 s'accompagnant d'abord d'un écartement forcé des deux segments secondaires 114 des deux pattes 111, 112 déformables élastiquement pour faire passer la tige 5 entre lesdites deux pattes 111, 112 puis d'un rabattement desdits deux segments secondaires 114 autour de la tige 5 par une relaxation naturelle, une fois que ladite tige 5 a dépassé lesdits deux segments secondaires 114.

## Revendications

1. Système de freinage (11) d'un véhicule comprenant une pédale (2) de frein possédant un bras (4) de levier, et un amplificateur (3) de freinage doté d'une tige (5) de poussée, ladite tige (5) de poussée étant solidarisée au bras (4) de levier de la pédale (2) de frein au moyen d'un clip de liaison (100) comportant une première composante de sécurité sous la forme d'un axe de rotation (101) traversant le bras (4) de levier de la pédale (2) de frein, et la tige (5) de poussée, et une deuxième composante de sécurité sous la forme d'une zone d'enserrement (102) venant se refermer autour de la tige (5) de poussée, **caractérisé en ce que** le clip (100) incluant la première composante (101) de sécurité et la deuxième composante (102) de sécurité est réalisé en matière plastique, et **en ce que** l'axe de rotation (101) constituant la première composante (101) de sécurité comprend un insert métallique (110).

2. Système de freinage selon la revendication 1, **caractérisé en ce que** le clip (100) est moulé autour de l'insert métallique (110).

3. Système de freinage selon l'une quelconque des revendications 1 ou 2, **caractérisé en ce que** la tige (5) de poussée se termine par une patte de liaison (6) comprenant deux parois parallèles (7, 8) et écartées, et en ce chacune desdites parois parallèles (7, 8) est dotée d'une ouverture destinée au passage de l'axe de rotation (101).

4. Système de freinage selon la revendication 3, **caractérisé en ce que** l'insert métallique (110) de l'axe de rotation (101) traverse les deux parois parallèles (7, 8) de la patte de liaison (6) terminant la tige (5) de poussée.

5. Système de freinage selon la revendication 4, **caractérisé en ce que** l'insert métallique (110) possède une longueur qui est supérieure à celle de l'axe de rotation (101) de sorte qu'une extrémité dudit insert métallique (110) arase une extrémité dudit axe de rotation (101) et une autre extrémité de cet insert (110) émerge d'une autre extrémité de cet axe de rotation (101).

6. Système de freinage selon la revendication 5, **caractérisé en ce que** l'axe de rotation (101) possède une zone d'extrémité (106) cylindrique présentant au moins une butée (107, 108) de retenue empêchant le retrait de l'axe de rotation (101) du clip (100) de liaison, une fois que ledit axe (101) a traversé les deux parois parallèles (7, 8) de la patte de liaison (6) terminant la tige de poussée (5).

7. Système de freinage selon la revendication 6, **caractérisé en ce qu'**il comprend deux butées de retenue (107, 108) déformables et diamétralement opposées, pour permettre l'insertion dans un sens de l'axe de rotation (101) dans les ouvertures des parois parallèles (7, 8) de la patte de liaison (6) terminant la tige (5), et pour empêcher son retrait dans l'autre sens.

8. Système de freinage selon l'une quelconque des revendications 1 à 7, **caractérisé en ce que** la zone d'enserrement (102) du clip de liaison (100) comprend deux pattes (107, 108) déformables élastiquement dont l'écartement par défaut est inférieur au diamètre de la tige (5) de poussée, et **en ce que** lesdites deux pattes (107, 108) sont d'abord écartées pour le passage de la tige de poussée (5) avant de se refermer autour de celle-ci.

9. Clip de liaison (100) pour la réalisation d'un système de freinage (1) selon l'une quelconque des revendications 1 à 8, ledit clip (100) comprenant une première composante de sécurité sous la forme d'un axe de rotation (101) et une deuxième composante de sécurité sous la forme d'une zone d'enserrement (102), caractérisé en ce ledit clip (100) incluant la première composante de sécurité et la deuxième composante (102) de sécurité est réalisé en matière plastique, et en ce que l'axe de rotation (101) constituant la première composante de sécurité comprend un insert métallique (110).

10. Clip de liaison (100) selon la revendication 9, **caractérisé en ce que** la longueur de l'insert métallique (110) est supérieure à celle de l'axe de rotation (101), et **en ce qu'**une première extrémité de l'insert métallique (110) comporte une embase élargie (141) et une deuxième extrémité dudit insert métallique (110) comprend un segment (144) de faible diamètre se terminant par un pion élargi (140), ledit insert métallique (110) étant inséré dans l'axe de rotation (110) par coulissement de sorte que le pion élargi (140) doive traverser à force un tronçon rétréci (150) de l'axe de rotation (101) avant de se retrouver derrière ledit tronçon rétréci (150) pour jouer le rôle d'une butée anti-retour, l'embase élargie (141) affleurant une surface du clip (100).

11. Procédé de fixation d'une pédale (2) de frein à un amplificateur (3) de freinage pour réaliser un système de freinage (1) selon l'une quelconque des revendications 1 à 8, ledit procédé étant réalisé au moyen d'un clip de liaison (100) selon la revendication 9, **caractérisé en ce qu'**il comprend les étapes suivantes :
- une étape de placement du bras de levier (4) de la pédale (2) de frein à une extrémité de la tige de poussée (5),
- une étape d'insertion de l'axe de rotation (101) du clip (100) de liaison dans une zone terminale (6, 7, 8, 9) de la tige (5) de poussée de l'amplificateur (3) de freinage et dans le bras de levier (4) de la pédale (2) de frein,
- une étape de mise en rotation du clip (100') de liaison autour de son axe de rotation (101) traversant la tige (5) de poussée et le bras de levier (4) de la pédale (2) de frein, jusqu'à ce que la zone d'enserrement (102) vienne au contact de ladite tige (5) de poussée,
- une étape de poursuite de la rotation du clip (100) s'accompagnant d'abord d'un écartement forcé de deux pattes (107, 108) déformables élastiquement constituant la zone d'enserrement (102) pour faire passer la tige (5) entre lesdites deux pattes (107, 108), puis d'un rabattement desdites deux pattes (107, 108) autour de la tige (5) par une relaxation naturelle de ces pattes déformables (107, 108).

## Patentansprüche

1. Bremssystem (1) eines Fahrzeugs, umfassend ein Bremspedal (2), das einen Hebelarm (4) besitzt, und einen Bremskraftverstärker (3), der mit einer Druckstange (5) ausgestattet ist, wobei die Druckstange (5) an dem Hebelarm (4) des Bremspedals (2) mittels eines Verbindungsclips (100) angebracht ist, der eine erste Sicherheitskomponente in Form einer Drehachse (101), die den Hebelarm (4) des Bremspedals (2) und die Druckstange (5) durchquert, und eine zweite Sicherheitskomponente in Form eines Einspannbereichs (102), der sich um die Druckstange (5) herum schließt, aufweist, **dadurch gekennzeichnet, dass** der Clip (100) einschließlich der ersten Sicherheitskomponente (101) und der zweiten Sicherheitskomponente (102) aus Kunststoff ausgeführt ist und dass die Drehachse (101), welche die erste Sicherheitskomponente (101) bildet, einen Metalleinsatz (110) umfasst.

2. Bremssystem nach Anspruch 1, **dadurch gekennzeichnet, dass** der Clip (100) um den Metalleinsatz (110) herum angeformt ist.

3. Bremssystem nach einem der Ansprüche 1 oder 2, **dadurch gekennzeichnet, dass** die Druckstange (5) mit einer Verbindungslasche (6) endet, die zwei parallele und beabstandete Wände (7, 8) umfasst, und dass jede der parallelen Wände (7, 8) mit einer Öffnung ausgestattet ist, die zum Durchführen der Drehachse (101) bestimmt ist.

4. Bremssystem nach Anspruch 3, **dadurch gekennzeichnet, dass** der Metalleinsatz (110) der Drehachse (101) die beiden parallelen Wände (7, 8) der Verbindungslasche (6) , mit der die Druckstange (5) endet, durchquert.

5. Bremssystem nach Anspruch 4, **dadurch gekennzeichnet, dass** der Metalleinsatz (110) eine Länge besitzt, die größer als die der Drehachse (101) ist, so dass ein Ende des Metalleinsatzes (110) ein Ende der Drehachse (101) egalisiert und ein anderes Ende dieses Einsatzes (110) aus einem anderen Ende dieser Drehachse (101) austritt.

6. Bremssystem nach Anspruch 5, **dadurch gekennzeichnet, dass** die Drehachse (101) einen zylindrischen Endbereich (106) besitzt, der mindestens einen Halteanschlag (107, 108) aufweist, der das Herausziehen der Drehachse (101) aus dem Verbindungsclip (100) verhindert, nachdem die Achse (101) die beiden parallelen Wände (7, 8) der Verbindungslasche (6), mit der die Druckstange endet (5), durchquert hat.

7. Bremssystem nach Anspruch 6, **dadurch gekennzeichnet, dass** es zwei verformbare und diametral entgegengesetzte Halteanschläge (107, 108) umfasst, um das Einführen in eine Richtung der Drehachse (101) in die Öffnungen der parallelen Wände (7, 8) der Verbindungslasche (6), mit der die Stange (5) endet, zu ermöglichen und ihr Herausziehen in die andere Richtung zu verhindern.

8. Bremssystem nach einem der Ansprüche 1 bis 7, **dadurch gekennzeichnet, dass** der Einspannbereich (102) des Verbindungsclips (100) zwei elastisch verformbare Laschen (107, 108) umfasst, deren Abstand standardmäßig geringer als der Durchmesser der Druckstange (5) ist, und dass die beiden Laschen (107, 108) zunächst zum Durchführen der Druckstange (5) beabstandet sind, bevor sie sich um diese herum schließen.

9. Verbindungsclip (100) zum Ausführen eines Bremssystems (1) nach einem der Ansprüche 1 bis 8, wobei der Clip (100) eine erste Sicherheitskomponente in Form einer Drehachse (101) und eine zweite Sicherheitskomponente in Form eines Einspannbereichs (102) umfasst, **dadurch gekennzeichnet, dass** der Clip (100) einschließlich der ersten Sicherheitskomponente und der zweiten Sicherheitskomponente (102) aus Kunststoff ausgeführt ist und dass die Drehachse (101), welche die erste Sicherheitskomponente bildet, einen Metalleinsatz (110) umfasst.

10. Verbindungsclip (100) nach Anspruch 9, **dadurch gekennzeichnet, dass** die Länge des Metalleinsatzes (110) größer als die der Drehachse (101) ist und dass ein erstes Ende des Metalleinsatzes (110) einen verbreiterten Fuß (141) aufweist und ein zweites Ende des Metalleinsatzes (110) ein Segment (144) mit geringem Durchmesser umfasst, das mit einem verbreiterten Kopf (140) endet, wobei der Metalleinsatz (110) durch Gleiten in die Drehachse (110) eingeführt wird, so dass der verbreiterte Kopf (140) unter Kraftaufwand einen verjüngten Abschnitt (150) der Drehachse (101) durchqueren muss, bevor er sich hinter dem verjüngten Abschnitt (150) befindet, um die Rolle eines Rücklaufverhinderungsanschlags zu spielen, wobei der verbreiterte Fuß (141) bündig mit einer Fläche des Clips (100) ist.

11. Verfahren zur Befestigung eines Bremspedals (2) an einem Bremskraftverstärker (3), um ein Bremssystem (1) nach einem der Ansprüche 1 bis 8 auszuführen, wobei das Verfahren mittels eines Verbindungsclips (100) nach Anspruch 9 ausgeführt wird, **dadurch gekennzeichnet, dass** es die folgenden Schritte umfasst:
- einen Schritt des Anordnens des Hebelarms (4) des Bremspedals (2) an einem Ende der Druckstange (5),
- einen Schritt des Einführens der Drehachse (101) des Verbindungsclips (100) in einen Endbereich (6, 7, 8, 9) der Druckstange (5) des Bremskraftverstärkers (3) und in den Hebelarm (4) des Bremspedals (2),
- einen Schritt des Drehens des Verbindungsclips (100) um seine Drehachse (101), die die Druckstange (5) und den Hebelarm (4) des Bremspedals (2) durchquert, bis der Einspannbereich (102) in Kontakt mit der Druckstange (5) gelangt,
- einen Schritt des Weiterdrehens des Clips (100), was zunächst mit einer erzwungenen Beabstandung von zwei elastisch verformbaren Laschen (107, 108) einhergeht, die den Einspannbereich (102) bilden, um die Stange (5) zwischen den beiden Laschen (107, 108) durchzuführen, dann mit einem Umlegen der beiden Laschen (107, 108) um die Stange (5) herum durch eine natürliche Relaxation dieser verformbaren Laschen (107, 108).

## Claims

1. Braking system (1) for a vehicle comprising a brake pedal (2) having a lever arm (4) and a brake booster (3) having a push rod (5), said push rod (5) being secured to the lever arm (4) of the brake pedal (2) by means of a connecting clip (100) including a first safety component in the form of a rotary pin (101) passing through the lever arm (4) of the brake pedal (2), and the push rod (5), and a second safety component in the form of a gripping zone (102) which closes about the push rod (5), **characterized in that** the clip (100) including the first safety component (101) and the second safety component (102) is made of plastics material, and **in that** the rotary pin (101) constituting the first safety component (101) comprises a metal insert (110).

2. Braking system according to Claim 1, **characterized in that** the clip (100) is moulded about the metal insert (110).

3. Braking system according to either of Claims 1 and 2, **characterized in that** the push rod (5) terminates in a connecting lug (6) comprising two parallel spaced-apart walls (7, 8), and **in that** each of said parallel walls (7, 8) is provided with an opening for the rotary pin (101) to pass through.

4. Braking system according to Claim 3, **characterized in that** the metal insert (110) of the rotary pin (101) passes through the two parallel walls (7, 8) of the connecting lug (6) terminating the push rod (5).

5. Braking system according to Claim 4, **characterized in that** the metal insert (110) has a length which is greater than the length of the rotary pin (101) so that one end of said metal insert (110) is flush with one end of said rotary pin (101) and another end of this insert (110) emerges from another end of this rotary pin (101).

6. Braking system according to Claim 5, **characterized in that** the rotary pin (101) has a cylindrical end zone (106) with at least one retaining stop (107, 108) preventing the rotary pin (101) from being withdrawn from the connecting clip (100), once said pin (101) has passed through the two parallel walls (7, 8) of the connecting lug (6) terminating the push rod (5).

7. Braking system according to Claim 6, **characterized in that** it comprises two deformable and diametrically opposed retaining stops (107, 108) enabling the rotary pin (101) to be inserted in one direction into the openings in the parallel walls (7, 8) of the connecting lug (6) terminating the rod (5), and preventing it from being withdrawn in the other direction.

8. Braking system according to any one of Claims 1 to 7, **characterized in that** the gripping zone (102) of the connecting clip (100) comprises two elastically deformable lugs (107, 108), the default gap between which is smaller than the diameter of the push rod (5), and **in that** said two lugs (107, 108) are initially separated to enable the push rod (5) to pass through, before closing about the latter.

9. Connecting clip (100) for producing a braking system (1) according to any one of Claims 1 to 8, said clip (100) comprising a first safety component in the form of a rotary pin (101) and a second safety component in the form of a gripping zone (102), **characterized in that** said clip (100) including the first safety component and the second safety component (102) is made of plastics material, and **in that** the rotary pin (101) constituting the first safety component comprises a metal insert (110) .

10. Connecting clip (100) according to Claim 9, **characterized in that** the length of the metal insert (110) is greater than the length of the rotary pin (101), and **in that** a first end of the metal insert (110) includes an enlarged base (141) and a second end of said metal insert (110) comprises a segment (144) of small diameter terminating in an enlarged stud (140), said metal insert (110) being slid into the rotary pin (110) in such a way that the enlarged stud (140) has to be forced through a narrowed section (150) of the rotary pin (101) to be positioned behind said narrowed section (150) to act as a non-return stop, the enlarged base (141) being flush with a surface of the clip (100).

11. Method of fastening a brake pedal (2) to a brake booster (3) to produce a braking system (1) according to any one of Claims 1 to 8, said method being carried out by means of a connecting clip (100) according to Claim 9, **characterized in that** it comprises the following steps:
- a step of placing the lever arm (4) of the brake pedal (2) at one end of the push rod (5),
- a step of inserting the rotary pin (101) of the connecting clip (100) into an end zone (6, 7, 8, 9) of the push rod (5) of the brake booster (3) and into the lever arm (4) of the brake pedal (2),
- a step of rotating the connecting clip (100) about its rotary pin (101) passing through the push rod (5) and the lever arm (4) of the brake pedal (2), until the gripping zone (102) comes into contact with said push rod (5),
- a step of continuing the rotation of the clip (100) involving firstly a forced separation of two elastically deformable lugs (107, 108) constituting the gripping zone (102) to enable the rod (5) to pass between said two lugs (107, 108), then a return of said two lugs (107, 108) about the rod (5) by a natural relaxation of these deformable lugs (107, 108).
